# FASCICULE DE BREVET EUROPEEN

(11) **EP 1 840 034 B1**
(45) Date de publication et mention de la délivrance du brevet: **04.05.2016**
(21) Numéro de dépôt: 07290366.9
(22) Date de dépôt: 27.03.2007
(51) Int. Cl.: B65B 55/10, B67C 7/00, B29C 49/42, B65B 55/06

(54) **Dispositif pour injecter un fluide dans des récipients en mouvement**
Vorrichtung zum Einspritzen einer Flüssigkeit in sich in Bewegung befindlichen Behältern
Device for injecting a fluid into moving containers

(30) Priorité: 30.03.2006 FR 0602768
(43) Date de publication de la demande: 03.10.2007
(73) Titulaire: Sidel Participations, 76930 Octeville Sur Mer (FR)
(72) Inventeur: Quetel, François c/o Sidel Participations, 76930 Octeville sur Mer (FR); Demare, Jérôme c/o Sidel Participations, 76930 Octeville sur Mer (FR)
(74) Mandataire: Domenego, Bertrand

(56) Documents cités:
- EP-A1- 0 436 042
- WO-A-98/01344
- DE-U1- 29 620 323
- DE-U1-202006 000 325
- US-A- 6 082 418

## Description

La présente invention concerne un dispositif pour injecter un fluide dans des récipients en mouvement.

Un tel dispositif est par exemple utilisé dans des systèmes de fabrication de bouteilles destinées à recevoir des liquides alimentaires, afin de stériliser l'intérieur des ébauches de bouteilles à l'aide d'un fluide stérilisant, généralement un gaz.

Les dispositifs connus actuellement sont du type comprenant :
- un convoyeur mobile portant :
   - une pluralité de supports de récipient répartis le long du convoyeur,
   - une pluralité de buses d'injection de fluide dans les récipients, chacune montée en regard d'un support de récipient respectif,
   - une piste d'alimentation en fluide des buses, prévue le long du convoyeur, et
   - une pluralité de conduites d'amenée de fluide aux buses, chacune reliée à une buse respective et possédant une entrée ménagée dans la piste d'alimentation, les entrées étant réparties le long de la piste d'alimentation, et
   - un distributeur de fluide fixe le long du convoyeur, destiné à introduire du fluide successivement dans les entrées, ce distributeur comportant :
   - un collecteur positionné en regard de la piste d'alimentation et destiné à recouvrir un nombre N d'entrées sélectionnées lors du déplacement relatif de la piste d'alimentation par rapport au collecteur, et
   - des moyens d'alimentation en fluide du collecteur.

Dans un tel dispositif connu, le convoyeur est un carrousel et la piste forme un moyeu central dans lequel le collecteur s'étend, sous forme d'un arbre fixe.

Le collecteur et la piste délimitent entre eux une rainure circonférentielle alimentée en fluide par le collecteur. Un joint d'obstruction est fixé au collecteur dans la rainure, sur un arc de longueur prédéterminée de manière qu'il obstrue un nombre donné d'entrées. Ainsi, le collecteur recouvre et alimente en gaz les entrées qui ne sont pas obstruées par le joint d'obstruction.

Des joints circulaires d'étanchéité sont montés au-dessus et au-dessous de la rainure, entre le collecteur et le carrousel.

Afin d'assurer une bonne étanchéité par les joints, il est nécessaire d'assurer un mouvement relatif de rotation entre le convoyeur et le collecteur le plus précis possible. Ainsi, le carrousel est monté en rotation par rapport au collecteur par deux roulements, par exemple à billes, disposés de chaque côté de la rainure. Ces roulements sont éloignés le plus possible l'un de l'autre le long de l'axe de rotation afin qu'aucun débattement radial ne soit possible.

Il résulte de cette contrainte que le dispositif connu présente un encombrement important le long de l'axe de rotation et utilise de plus des roulements qui doivent fonctionner à température élevée, ce qui les rend coûteux.

L'invention vise à remédier aux inconvénients précédents.

A cet effet, l'invention a pour objet un dispositif pour injecter un fluide dans des récipients en mouvement, du type précité, caractérisé en ce que le collecteur définit une boîte d'alimentation qui s'étend sur une longueur du convoyeur correspondant au nombre N d'entrées sélectionnées, une garniture d'étanchéité étant prévue pour assurer un contact étanche entre la boîte et la piste d'alimentation, et en ce que le distributeur comprend des moyens pour repousser la boîte contre la piste d'alimentation du convoyeur.

Grâce à l'invention, l'étanchéité entre le convoyeur et le distributeur est assurée par la garniture d'étanchéité comprimée entre la boîte d'alimentation et la piste par les moyens pour repousser ladite boîte. La présence de roulements n'est donc plus nécessaire et l'encombrement du dispositif peut être réduit.

Un dispositif selon l'invention peut en outre comporter l'une ou plusieurs des caractéristiques suivantes :
- le convoyeur mobile comprend un carrousel monté en rotation autour d'un axe de rotation, les supports de récipient étant répartis sur le carrousel autour de l'axe de rotation et la piste d'alimentation en fluide étant une piste circulaire définie sur le carrousel autour de l'axe de rotation ;
- la piste s'étend dans sa dimension transversale sensiblement perpendiculairement à l'axe de rotation ;
- la piste s'étend dans sa dimension transversale sensiblement parallèlement à l'axe de rotation ;
- la piste d'alimentation s'étend le long d'un moyeu du carrousel, les entrées sont ménagées vers l'intérieur du carrousel, et le collecteur est disposé dans l'espace délimité par le moyeu ;
- la piste d'alimentation s'étend à la périphérie du carrousel, les entrées sont ménagées vers l'extérieur du carrousel, et le collecteur est disposé radialement à l'extérieur du carrousel ;
- les moyens pour repousser la boîte contre la piste d'alimentation comprennent un vérin pneumatique ;
- le collecteur et les moyens d'alimentation en fluide sont solidaires l'un de l'autre et montés ensemble en translation selon un axe de translation, et les moyens pour repousser la boîte sont configurés pour repousser l'ensemble du collecteur et des moyens d'alimentation ;
- l'axe de translation coupe la piste d'alimentation sensiblement perpendiculairement ;
- les moyens d'alimentation en fluide sont configurés pour fournir un mélange gazeux d'air et d'agent de stérilisation à une température prédéterminée, de préférence 130°C ;
- le convoyeur comprend des moyens de chauffage pour maintenir au moins les conduites à une température prédéterminée, de préférence 130°C.

L'invention sera mieux comprise à l'aide de la description qui va suivre donnée uniquement à titre d'exemple et faite en se référant aux dessins annexés parmi lesquels :
- la figure 1 est une vue en coupe verticale d'un dispositif selon l'invention, et
- la figure 2 est une vue de dessus, en transparence, du dispositif de la figure 1.

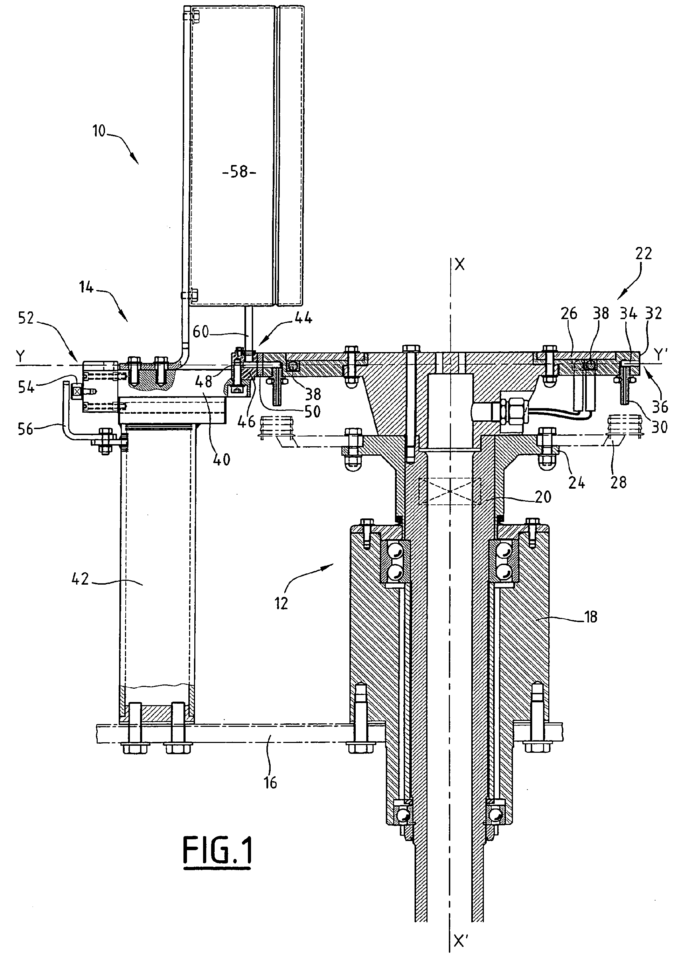

En référence à la figure 1, un dispositif 10 pour injecter un fluide dans des récipients en mouvement est représenté.

Le dispositif 10 comprend un convoyeur mobile 12 et un distributeur de fluide 14, tous deux montés sur un socle 16.

Le convoyeur 12 comprend un palier 18 solidaire du socle 16, dans lequel une colonne verticale 20 est montée en rotation autour d'un axe X-X'. La colonne 20 supporte, à son extrémité supérieure, un carrousel 22 ainsi monté en rotation autour de l'axe X-X'.

Le carrousel 22 comporte un plateau horizontal circulaire inférieur 24 et un plateau horizontal circulaire supérieur 26 montés l'un sur l'autre le long de l'axe X-X'.

Le plateau inférieur 24 porte une pluralité de supports de récipient 28 uniformément répartis autour de l'axe de rotation X-X', c'est-à-dire séparés d'un pas fixe.

Le plateau supérieur 26 porte quant à lui une pluralité de buses 30 d'injection de fluide dans les récipients. Le nombre de buses d'injection 30 correspond au nombre de supports de récipient 28. Chaque buse d'injection 30 est montée orientée vers le bas, en regard d'un support de récipient 28 respectif. La tranche extérieure du plateau supérieur 26 définit une piste 32 d'alimentation en fluide des buses 30, comme cela sera expliqué par la suite. La piste d'alimentation 32 est circulaire et cylindrique, c'est-à-dire qu'elle s'étend, dans sa dimension transversale, parallèlement à l'axe de rotation X-X'.

Une pluralité de conduites 34 d'amenée de fluide aux buses 30 sont ménagées dans le plateau supérieur 26. Chaque conduite 34 est reliée à une buse 30 respective et possède une entrée 36 ménagée dans la piste d'alimentation 32 vers l'extérieur du carrousel 22, c'est-à-dire débouchant à l'opposé de l'axe de rotation X-X'. Les entrées 36 des conduites 34 sont réparties uniformément le long de la piste d'alimentation 32 autour de l'axe X-X', c'est-à-dire séparées d'un pas fixe correspondant angulairement à celui des supports de récipient 28.

Le plateau supérieur 26 est par ailleurs muni d'une résistance chauffante 38 s'étendant circulairement autour de l'axe de rotation X-X'. La résistance 38 est destinée à maintenir le plateau supérieur 26 à une température prédéterminée, 130°C dans l'exemple décrit.

Le distributeur de fluide 14 comprend un coulisseau 40 monté mobile en translation le long d'un axe horizontal Y-Y' sur un pied 42 solidaire du socle 16.

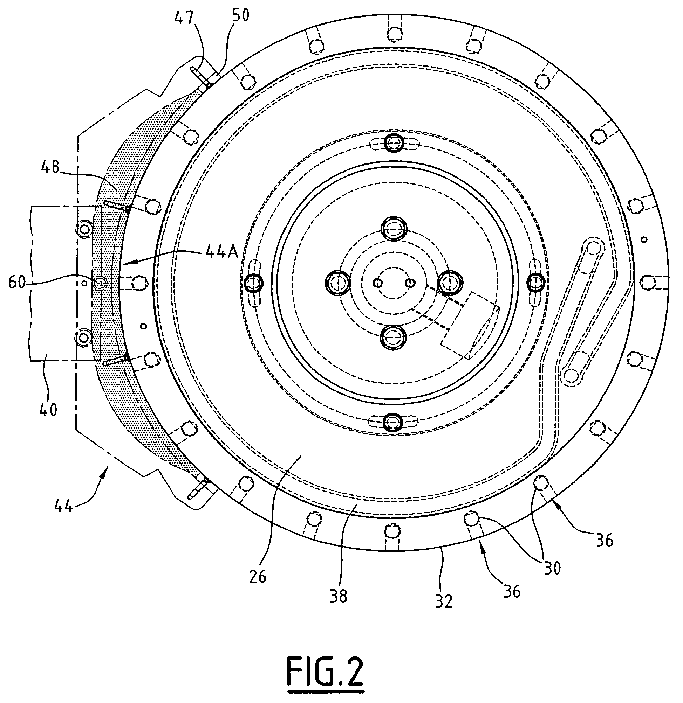

L'axe Y-Y' est orienté pour passer par l'axe de rotation X-X' de manière à couper perpendiculairement la piste 32 du carrousel 22. Le côté du coulisseau 40 le plus proche du carrousel 22 le long de l'axe Y-Y' porte un collecteur 44 positionné en regard de la piste d'alimentation 32. Le collecteur 44 recouvre cinq entrées sélectionnées lors du déplacement relatif de la piste d'alimentation 32 par rapport à ce collecteur 44. Ce point sera expliqué plus en détail par la suite, en référence à la figure 2.

Le collecteur 44 définit une boîte d'alimentation 46 délimitant une enceinte d'alimentation générale 48, qui communique avec les cinq entrées sélectionnées.

Le collecteur 44 est en outre pourvu d'une garniture d'étanchéité 50, intercalée entre la boîte 46 et la piste d'alimentation 32, pour assurer un contact étanche entre ces deux pièces. Le matériau de la garniture 50 est, dans l'exemple décrit, obtenu à partir d'une résine polyétheréthercétone vierge. La garniture 50 a une épaisseur constante et est fixée sur la face interne de la boîte 46 par des vis 47 (figure 2).

Le côté du coulisseau 40 éloigné du carrousel 22 le long de l'axe Y-Y' porte un vérin pneumatique 52 muni d'un piston externe 54 destiné à s'appuyer sur une tige de butée 56 solidaire du pied 42. Le vérin 52 est orienté pour repousser le coulisseau 40 le long de l'axe Y-Y' vers le carrousel afin de repousser la boîte 46 contre la piste d'alimentation 32.

Le distributeur de fluide 14 comprend par ailleurs un bloc 58 d'alimentation en fluide du collecteur 44. Ce bloc d'alimentation 58 est fixé solidairement au coulisseau 40 et disposé au-dessus du collecteur 44. Une conduite d'alimentation générale 60 relie le bloc d'alimentation 58 au collecteur 44 et, plus précisément, à l'enceinte d'alimentation générale 48. Le bloc d'alimentation en fluide 58 est configuré pour fournir un mélange gazeux d'air et de H₂O₂ à une température prédéterminée de 130°C dans l'exemple décrit.

En référence à la figure 2, le collecteur 44 a une forme générale de croissant délimitant une face interne 44A courbée selon un rayon correspondant à celui de la piste circulaire 32. Ainsi, la face interne 44A, qui est la face de la garniture 50, est au contact sur toute sa longueur avec la piste circulaire 32. La longueur de la face interne 44A correspond à la longueur occupée par cinq entrées successives, sur la piste d'alimentation 32.

L'enceinte d'alimentation générale 48 est formée d'une fente ménagée dans la face interne 44A suffisamment profonde pour atteindre la conduite d'alimentation générale 60. L'enceinte 48 a un profil horizontal également en forme de croissant.

Par ailleurs, on peut voir sur la figure 2 que les extrémités de la résistance de chauffage 38 du plateau supérieur 26 se recouvrent horizontalement. Ceci est du au fait que les extrémités de la résistance de chauffage fournissent moins de chaleur que les autres portions de cette résistance. Le recouvrement permet donc un chauffage uniforme.

En fonctionnement, un moteur (non représenté) entraîne en rotation la colonne 20 et le carrousel 22 autour de l'axe X-X', alors que la résistance 38 porte et maintient la température du plateau supérieur 26 à 130 °C.

Les récipients, par exemple des ébauches qui serviront par la suite à former des bouteilles, sont transférés un à un sur les supports de récipient 28 du plateau inférieur 24, sensiblement à l'opposé du distributeur de fluide 14.

En même temps, le bloc d'alimentation 58 fournit un mélange gazeux d'air et de H₂O₂ dans des proportions prédéterminées et à une température de 130°C correspondant à celle maintenue dans le plateau supérieur 26. Cette température permet de maintenir le mélange sous forme de vapeur sèche, c'est-à-dire sans gouttelette. L'enceinte d'alimentation générale 48 est ainsi remplie du mélange gazeux, qui alimente les cinq buses 30 dont l'entrée 36 du conduit 34 est recouverte par la boîte 46.

Ainsi, lors de la rotation des ébauches avec le carrousel, la buse en regard de chaque ébauche sera alimentée lorsque en tant que son entrée 36 sera recouverte par la boîte 46.

On remarquera que toutes les ébauches seront stérilisées par le mélange gazeux de la même manière, quelle que soit la forme de l'enceinte d'alimentation générale 48, puisque les entrées 36 suivent toutes le même trajet par rapport à la boîte 46 et donc par rapport à l'enceinte 48.

Tout au long du fonctionnement du dispositif, le vérin pneumatique 52 repousse la boîte 46 contre la piste 32. La garniture 50, fixée à la boîte 46, frotte ainsi contre la piste 32 et assure le contact entre le collecteur 44 et la piste 32. La pression exercée par le vérin 52 permet une bonne étanchéité entre le collecteur fixe en rotation 44 et le carrousel mobile 22. En outre, cette configuration a l'avantage de compenser par la même occasion l'usure de la garniture 50 due à son frottement sur la piste mobile 32.

On remarquera que le positionnement judicieux de la piste d'alimentation 32 à la périphérie du carrousel 22 autorise l'utilisation de conduites 34 de très faible longueur, puisque les buses 30 sont elles aussi disposées à la périphérie du carrousel 22. Ainsi, la déperdition d'énergie calorifique du gaz le long de chaque conduite 34 est faible, ce qui diminue la consommation d'énergie dans la résistance 38 nécessaire à maintenir le plateau supérieur 26, et donc le gaz dans les conduites 34, à 130°C.

Par ailleurs, la disposition du collecteur 44 à l'extérieur du carrousel 22 permet très facilement de le séparer du carrousel 22, pour effectuer des tâches de maintenance, comme par exemple changer la garniture 50 lorsque son usure devient trop importante.

Néanmoins, l'invention n'est pas limitée au mode de réalisation représenté sur les figures.

Par exemple, dans un autre mode de réalisation, la piste d'alimentation 32 est annulaire, c'est-à-dire qu'elle s'étend dans sa dimension transversale perpendiculairement à l'axe de rotation X-X'. Dans ce cas, la piste 32 peut être prévue sur le dessus du plateau supérieur 26 et le distributeur de fluide 14 adapté en conséquence : la boîte d'alimentation 46 est notamment repoussée parallèlement à l'axe de rotation, vers le bas.

Dans encore un autre mode de réalisation, le plateau supérieur 26 comporte un moyeu central dans lequel s'étend le collecteur 44. Dans ce cas, la piste circulaire forme le moyeu et est à nouveau cylindrique, mais cette fois orientée vers l'axe de rotation X-X'.

## Revendications

1. Dispositif pour injecter un fluide dans des récipients en mouvement, du type comprenant :
- un convoyeur mobile (12) portant :
- une pluralité de supports de récipient (28) répartis le long du convoyeur (12),
- une pluralité de buses (30) d'injection de fluide dans les récipients, chacune montée en regard d'un support de récipient (28) respectif,
- une piste (32) d'alimentation en fluide des buses (30), prévue le long du convoyeur (12), et
- une pluralité de conduites (34) d'amenée de fluide aux buses (30), chacune reliée à une buse (30) respective et possédant une entrée (36) ménagée dans la piste d'alimentation (32), les entrées (36) étant réparties le long de la piste d'alimentation (32), et
- un distributeur de fluide (14) fixe le long du convoyeur (12), destiné à introduire du fluide successivement dans les entrées (36), ce distributeur (14) comportant :
- un collecteur (44) positionné en regard de la piste d'alimentation (32) et destiné à recouvrir un nombre N d'entrées (36) sélectionnées lors du déplacement relatif de la piste d'alimentation (32) par rapport au collecteur (44), et
- des moyens (58) d'alimentation en fluide du collecteur (44),
**caractérisé en ce que** le collecteur (44) définit une boîte d'alimentation (46) qui s'étend sur une longueur du convoyeur correspondant au nombre N d'entrées (36) sélectionnées, une garniture d'étanchéité (50) étant prévue pour assurer un contact étanche entre la boîte (46) et la piste d'alimentation (32), et **en ce que** le distributeur (14) comprend des moyens (52) pour repousser la boîte (46) contre la piste d'alimentation (32) du convoyeur (12).

2. Dispositif selon la revendication 1, **caractérisé en ce que** le convoyeur mobile (12) comprend un carrousel (22) monté en rotation autour d'un axe de rotation (X-X'), les supports de récipient (28) étant répartis sur le carrousel (22) autour de l'axe de rotation (X-X') et la piste (32) d'alimentation en fluide étant une piste circulaire définie sur le carrousel (22) autour de l'axe de rotation (X-X').

3. Dispositif selon la revendication 2, **caractérisé en ce que** la piste (32) est annulaire, c'est-à-dire qu'elle s'étend sensiblement perpendiculairement à l'axe de rotation (X-X').

4. Dispositif selon la revendication 2, **caractérisé en ce que** la piste (32) est circulaire et cylindrique, c'est-à-dire qu'elle s'étend sensiblement parallèlement à l'axe de rotation (X-X').

5. Dispositif selon la revendication 4, **caractérisé en ce que** la piste d'alimentation (32) s'étend le long d'un moyeu du carrousel (22), **en ce que** les entrées (36) sont ménagées vers l'intérieur du carrousel (22), et **en ce que** le collecteur (44) est disposé dans l'espace délimité par le moyeu.

6. Dispositif selon la revendication 4, **caractérisé en ce que** la piste d'alimentation (32) s'étend à la périphérie du carrousel (22), **en ce que** les entrées (36) sont ménagées vers l'extérieur du carrousel (22), et **en ce que** le collecteur (44) est disposé radialement à l'extérieur du carrousel.

7. Dispositif selon l'une quelconque des revendications 1 à 6, **caractérisé en ce que** les moyens (52) pour repousser la boîte (46) contre la piste d'alimentation (32) comprennent un vérin pneumatique.

8. Dispositif selon l'une quelconque des revendications 1 à 7, **caractérisé en ce que** le collecteur (44) et les moyens d'alimentation en fluide (58) sont solidaires l'un de l'autre et montés ensemble en translation selon un axe de translation (Y-Y'), et **en ce que** les moyens (52) pour repousser la boîte (46) sont configurés pour repousser l'ensemble du collecteur (44) et des moyens d'alimentation (58).

9. Dispositif selon la revendication 8, **caractérisé en ce que** l'axe de translation (Y-Y') coupe la piste d'alimentation (32) sensiblement perpendiculairement.

10. Dispositif selon l'une quelconque des revendications précédentes, **caractérisé en ce que** les moyens d'alimentation en fluide (58) sont configurés pour fournir un mélange gazeux d'air et d'agent de stérilisation à une température prédéterminée, de préférence 130°C.

11. Dispositif selon l'une quelconque des revendications précédentes, **caractérisé en ce que** le convoyeur (22) comprend des moyens de chauffage (38) pour maintenir au moins les conduites (34) à une température prédéterminée, de préférence 130°C.

## Patentansprüche

1. Vorrichtung zum Einspritzen eines Fluids in Behälter in Bewegung, des Typs aufweisend:
- einen bewegbaren Förderer (12), welcher trägt:
- eine Mehrzahl von Behälterträgern (28), welche entlang des Förderers (12) verteilt sind,
- eine Mehrzahl von Düsen (30) zum Einspritzen von Fluid in die Behälter, wobei jede jeweils gegenüber einem Behälterträger (28) montiert ist,
- eine Bahn (32) zur Versorgung der Düsen (30) mit Fluid, welche entlang des Förderers (12) vorgesehen ist, und
- eine Mehrzahl von Leitungen (34) zum Zuführen von Fluid zu den Düsen (30), wobei jede jeweils mit einer Düse (30) verbunden ist und einen in der Bahn zur Versorgung (32) angeordneten Einlass (36) aufweist, wobei die Einlässe (36) entlang der Bahn zur Versorgung (32) verteilt sind, und
- einen Fluidverteiler (14), welcher entlang des Förderers (12) feststehend ist und welcher dazu bestimmt ist, Fluid nacheinander in die Einlässe (36) zuzuführen, wobei dieser Verteiler (14) aufweist:
- einen Kollektor (44), welche gegenüber der Bahn zur Versorgung (32) positioniert ist und welcher dazu bestimmt ist, eine Anzahl N von ausgewählten Einlässen (36) abzudecken während der relativen Bewegung der Bahn zur Versorgung (32) bezüglich des Kollektors (44), und
- Mittel (58) zur Versorgung des Kollektors (44) mit Fluid,
**dadurch gekennzeichnet, dass** der Kollektor (44) ein Gehäuse zur Versorgung (46) definiert, welches sich über eine Länge des Förderers entsprechend der Anzahl N der ausgewählten Einlässe (36) erstreckt, wobei eine Dichtung (50) vorgesehen ist, um einen abdichtenden Kontakt zwischen dem Gehäuse (46) und der Bahn zur Versorgung (32) zu gewähren, und dadurch, dass der Fluidverteiler (14) Mittel (52) aufweist, um das Gehäuse (46) gegen die Bahn zur Versorgung (32) des Förderers (12) zu schieben.

2. vorrichtung nach Anspruch 1, **dadurch gekennzeichnet, dass** der bewegbare Förderer (12) ein Karussell (22) aufweist, welches drehbar um eine Drehachse (X-X') montiert ist, wobei die Behälterträger (28) auf dem Karussell (22) um die Drehachse (X-X') verteilt sind und die Bahn (32) zur Fluidversorgung eine Kreisbahn ist, welche auf dem Karussell (22) um die Drehachse (X- X') definiert ist.

3. Vorrichtung nach Anspruch 2, **dadurch gekennzeichnet, dass** die Bahn (32) iingförmig ist, d.h. sich im Wesentlichen senkrecht zur Drehachse (X-X') erstreckt.

4. Vorrichtung nach Anspruch 2, **dadurch gekennzeichnet, dass** die Bahn (32) kreisförmig und zylindrisch ist, d.h. sich im Wesentlichen parallel zu der Drehachse (X-X ') erstreckt.

5. Vorrichtung nach Anspruch 4, **dadurch gekennzeichnet, dass** die Bahn zur Versorgung (32) sich entlang einer Nabe des Karussells (22) erstreckt, dass die Einlässe (36) nach innen des Karussells (22) angeordnet sind und dass der Kollektor (44) in dem Raum, welcher durch die Nabe begrenzt ist, angeordnet ist.

6. Vorrichtung nach Anspruch 4, **dadurch gekennzeichnet, dass** die Bahn zur Versorgung (32) sich an der Peripherie des Karussells (22) erstreckt, dass die Einlässe (36) nach außen des Karussells (22) angeordnet sind und dass der Kollektor (44) radial am Äußeren des Karussells angeordnet ist.

7. Vorrichtung nach einem der Ansprüche 1 bis 6, **dadurch gekennzeichnet, dass** die Mittel (52) zum Schieben des Gehäuses (46) gegen die Bahn zur Versorgung (32) einen Pneumatikzylinder aufweisen.

8. Vorrichtung nach einem der Ansprüche 1 bis 7, **dadurch gekennzeichnet, dass** der Kollektor (44) und die Mittel zur Versorgung mit Fluid (58) miteinander einstückig sind und zusammen in Translation längs einer Translationsachse (Y-Y ') montiert sind, und dass die Mittel (52) zum Schieben des Gehäuses (46) so angeordnet sind, um die Gesamtheit aus dem Kollektor (44) und den Mitteln zur Versorgung (58) zu schieben.

9. Vorrichtung nach Anspruch 8, **dadurch gekennzeichnet, dass** die Translationsachse (Y-Y') die Bahn zur Versorgung (32) im Wesentlichen senkrecht schneidet.

10. Vorrichtung nach einem der vorhergehenden Ansprüche, **dadurch gekennzeichnet, dass** die Mittel zur Versorgung mit Fluid (58) so angeordnet sind, um eine gasförmige Mischung aus Luft und Sterilisierungsmittel bei einer vorbestimmten Temperatur, vorzuasweise 130 °C, zuzuführen.

11. Vorrichtung nach einem der vorhergehenden Ansprüche, **dadurch gekennzeichnet, dass** der Förderer (22) Mittel zum Aufwärmen (38) aufweist, um mindestens die Leitungen (34) bei einer vorbestimmten Temperatur, vorzugsweise 130 °C, zu halten.

## Claims

1. Device for injecting a fluid into moving containers, of the type comprising:
- a movable conveyor (12) having:
o a plurality of container supports (28) distributed along the conveyor (12);
o a plurality of nozzles (30) for injecting fluid into the containers, each one mounted facing a respective container support (28);
o a nozzle fluid-feed track (32), arranged along the conveyor (12), and
o a plurality of pipes (34) for conveying fluid to the nozzles (30), each one connected to a respective nozzle (30) and having an inlet (36) arranged in the feed track (32), the inlets (36) being distributed along the feed track (32), and
- a fixed fluid dispenser (14) alongside the conveyor (12), designed to introduce fluid successively into the inlets (36), this dispenser (14) comprising:
o a distributor (44) positioned facing the feed track (32) and designed to cover a number N of inlets (36) selected at the time of the relative displacement of the feed track (32) in relation to the distributor (44), and
o means (52) to feed the distributor (44) with fluid,
**characterized in that** the distributor (44) defines a manifold (46) which extends along the length of the conveyor communicating with the number N of inlets (36) selected, a seal (50) being provided to ensure a sealed contact between the manifold (46) and the feed track (32), and **in that** the dispenser (14) comprises means (52) to push the manifold (46) against the conveyor (12) feed track (32).

2. Device according to claim 1, **characterized in that** the movable conveyor (12) has a carousel (22) mounted rotating around an axis of rotation (X-X'), the container supports (28) being distributed on the carousel (22) about the axis of rotation (X-X') and the fluid feed track (32) being a circular track (32) defined on the carousel (22) about the axis of rotation (X-X').

3. Device according to claim 2, **characterized in that** the track (32) is annular, that is to say extends substantially perpendicularly to the axis of rotation (X-X').

4. Device according to claim 2, **characterized in that** the track (32) is circular and cylindrical, that is to say extends substantially parallelly to the axis of rotation (X-X').

5. Device according to claim 4, **characterized in that** the feed track (32) extends along a hub of the carousel (22), **in that** the inlets (36) are arranged towards the inside of the carousel (22) and **in that** the distributor (44) is arranged in the space delimited by the hub.

6. Device according to claim 4, **characterized in that** the feed track (32) extends round the periphery of the carousel (22), **in that** the inlets (36) are arranged towards the outside of the carousel (22) and **in that** the distributor (44) is arranged radially on the outside of the carousel.

7. Device according to any of claims 1 to 6, **characterized in that** the means (52) to push the manifold (46) against the feed track (32) comprise a pneumatic actuator.

8. Device according to any of claims 1 to 7, **characterized in that** the distributor (44) and the fluid feed means (58) are connected to each other and mounted together in translation along an axis of translation (Y-Y'), and **in that** the means (52) for pushing the manifold (46) are configured to push the distributor (44) and feed means (58) assembly.

9. Device according to claim 8, **characterized in that** the axis of translation (Y-Y') intersects the feed track (32) substantially perpendicularly.

10. Device according to any of the preceding claims, **characterized in that** the fluid feed means (58) are configured to supply a gaseous mixture of air and sterilisation agent at a preset temperature, preferably 130 °C.

11. Device according to any of the preceding claims, **characterized in that** the conveyor (22) has heating means (38) to keep at least the pipes (34) at a preset temperature, preferably 130 °C.
